# EUROPEAN PATENT APPLICATION

(11) **EP 1 545 127 A1**
(43) Date of publication of application: **22.06.2005**
(21) Application number: 02746028.6
(22) Date of filing: 12.07.2002
(51) Int. Cl.: H04N 5/445, H04N 5/44, H04N 5/76, H04N 7/08, B41J 29/38, G06F 3/12

(54) **DATA BROADCAST PRINTING METHOD, SYSTEM, AND PROGRAM**

(30) Priority: 16.07.2001 JP 2001215803; 05.11.2001 JP 2001338958
(71) Applicant: MATSUSHITA ELECTRIC INDUSTRIAL CO., LTD., Kadoma-shi, Osaka 571-0050 (JP)
(72) Inventor: KUWANO, Hideyuki, Hirakata-shi, Osaka 573-0018 (JP); MURATA, Kazuyuki, Kyotanabe-shi, Kyoto 610-0352 (JP); YAMAGUCHI, Takehito, Hirakata-shi, Osaka 573-0035 (JP); OKADA, Yuji, Setagaya-ku, Tokyo 154-0021 (JP); NAKANISHI, Takashi, Kobe-shi, Hyogo 655-0872 (JP); HISATOMI, Kenji, Hirakata-shi, Osaka 573-0163 (JP); MATSUNAGA, Shigeki, Osaka-shi, Osaka 532-0022 (JP)
(74) Representative: Dempster, Benjamin John Naftel
(86) International application number: PCT/JP2002/007134
(87) International publication number: WO 2003/009584

(57) **Abstract**

A system for printing print data that is multiplexed with a television-broadcast signal. By displaying a print button only when printing is possible, it is not possible for the user to determine whether there is no print data itself or there is no printing display because there is no printer. In this system, not only is print data detected, but the printer is also detected. When print data is detected but the printer is not detected, a display indicating that printing of the print data is not possible is performed to notify the user that printing is not possible because there is no printer even though there is print data.

## Description

### TECHNICAL FIELD

This invention relates to a method, system and program for printing print data that is multiplexed with a television signal such as that of a digital television broadcast.

### BACKGROUND ART

In a digital television broadcast, various kinds of data are multiplexed and sent to the viewer's system. For example, a method of multiplexing print data as the data and then printing it has been proposed. As a typical proposal, there is a method in which when there is print data, the fact that there is printing information is displayed, and the print data is printed by issuing a print instruction from a print button or the like. In this case, there is the opinion that displaying the printing information is annoying. Therefore, in Japanese unexamined patent publication No. H11-237966, whether or not a printer is connected is detected, and printing information is displayed only when a printer is connected.

However, in this method, it is not possible for the user to determine whether there is print data or there is no print display because there is no printer. In other words, when there is no printer connected, in order to check whether or not there are contents to be printed included in the broadcast data, it is necessary to connect the printer every time before checking. Also, supposing that the user does not have a printer, since the print contents and printing system are related and have become popular together, notifying the user of the existence of print contents is significant in relaying to the user the usefulness of the printer.

On the other hand, when a printing instruction is issued in a system in which a printer is not connected, it is impossible for the creator of the contents to imagine how the system will behave. Therefore, making it impossible to execute unnecessary instructions also makes it possible to prevent the occurrence of trouble.

### DISCLOSURE OF THE INVENTION

Taking the aforementioned problems into consideration, the object of the present invention is to display on the screen using different expressions when printing is not possible because there is no printer connected even though there is print data, when there is no print data, or when it is possible to print.

The data-broadcast-printing system of this invention detects print data that is multiplexed with a television broadcast signal, and detects a printer. When print data is detected and a printer is also detected, a 'printing-possible' display is provided on the television screen to indicate that printing is possible. When there is a printing instruction at that time, the print data is printed by the printer. On the other hand, when print data is detected but no printer is detected, control is performed to providing a 'printing-not-possible' display on the television screen to indicate that the print data cannot be printed. Even though there may be a printing instruction after that, that printing instruction will not be received.

Furthermore, when print data that is multiplexed with a television broadcast signal is detected and a printer is also detected, an instruction to turn the power ON to the printer is executed. Executing the power-ON instruction to the printer can also be performed after the print data has been detected and before detecting the printer.

### BRIEF DESCRIPTION OF THE DRAWINGS

Fig. 1 is a schematic drawing of the system of a first embodiment of the invention.

Fig. 2 is an example of the scripting in the case of a button.

Figs. 3A and 3B are examples of the button display on the screen when a printer is detected and when a printer is not detected.

Fig. 4 is an example of the scripting when there is a text area.

Figs. 5A and 5B are examples of the text area display on the screen when a printer is detected and when a printer is not detected.

Fig. 6 is a flowchart that explains the operation of the system of the first embodiment of the invention.

Fig. 7 is a schematic drawing of the system of a second embodiment of the invention.

Fig. 8 is a flowchart that explains the operation of the system of the second embodiment of the invention.

Fig. 9 is a schematic drawing of the system of a third embodiment of the invention.

Fig. 10 is a flowchart that explains the operation of the system of the third embodiment of the invention.

Fig. 11 is a flowchart that explains the operation of the system of the fourth embodiment of the invention.

Fig. 12 is a flowchart that explains the operation of the system of the fifth embodiment of the invention.

Fig. 13 is another flowchart that explains the operation of the system of the first embodiment of the invention.

Fig. 14 is still another flowchart that explains the operation of the system of the first embodiment of the invention.

Figs. 15A and 15B are fence charts showing the procedure for detecting USB devices when a printer is connected and when a printer is not connected.

Fig. 16 is an example of the broadcast data that identifies the print data in the first embodiment of the invention.

Fig. 17 is an example of the broadcast data that identifies the print data in the first embodiment of the invention.

Figs. 18A and 18B are other examples of the button display on the screen when a printer is detected and when a printer is not detected.

Fig. 19 is a schematic drawing of the system of a sixth embodiment of the invention.

Figs. 20A to 20D are examples of a print-button display for the browser of the sixth embodiment of the invention.

Figs. 21A to 21D are examples of a print-button display for the browser of the sixth embodiment of the invention.

Fig. 22 is an example of a printing-allowed entry in the broadcast data of the sixth embodiment of the invention.

Figs. 23A and 23B are examples of a button display on the screen of a seventh embodiment of the invention.

Fig. 24 is an example of the broadcast data of the seventh embodiment of the invention.

Fig. 25 is a fence chart showing the flow of the operation of the seventh embodiment of the invention.

Fig. 26 is an example of the broadcast data of an eighth embodiment of the invention.

Fig. 27 is a drawing for explaining the construction of the printer of the eighth embodiment of the invention.

### BEST MODE FOR CARRYING OUT THE INVENTION

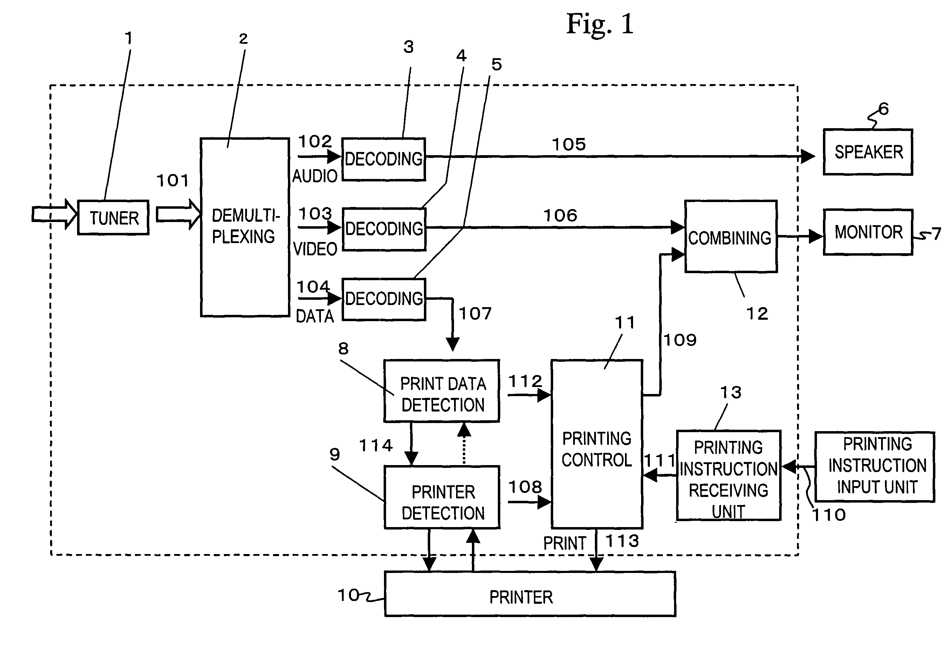

The preferred embodiments of the invention will be explained below using Fig. 1 to Fig. 26. In the embodiments of the invention, it is presumed that print data is multiplexed with a digital television broadcast and transmitted.

### (First Embodiment)

Fig. 1 is a schematic drawing of the system explained for a first embodiment of the invention. As shown in Fig. 1, this system comprises an STB as a receiver, and a printer, speakers and monitor are connected to the STB. In this STB, a tuner 1 receives the digital television broadcast signal and selects a desired channel. The received signal 101 that is received by the selected channel is divided by a demultiplexing unit 2 into an audio signal 102, video signal 103 and data signal 104. The audio signal 102 and video signal 103 are encoded, so they are decoded by decoding units 3, 4 into an output audio signal 105 and output video signal 106, and these signals are output from the speakers 6 and monitor 7, respectively. On the other hand, print data is sent as a data signal 104. Here the print data is data to be printed that is included beforehand in the broadcast signal and that there is corresponding 'printing-possible' information that indicates whether or not printing is possible.

The signal that is divided out as the data signal 104 is also encoded, and it is decoded by a decoding unit 5 into a decoded data signal 107. In the case that the data signal is not encoded, it is not especially necessary to use the decoding unit 5. A print data-detection unit 8 receives the decoded data signal 107, and based on the printing-possible information, determines whether or not it contains print data. When it is determined that there is print data contained in the decoded data signal 107, a printer-detection unit 9 detects the printer 10, and that result 108 is transmitted to the printing-control unit 11. When the printer 10 is detected, the printing-control unit 11 outputs a printing-allowed signal as the printing-allowed/not-allowed signal 109 that allows printing, and a combination unit 12 combines the printing button with the output video signal 110, and outputs it to the monitor 7. A printing-instruction-receiving unit 13 receives a printing instruction 110 from the user, and transmits that printing instruction 111 to the printing-control unit 11. After the printing-control unit 11 receives the printing instruction 111, it analyzes the print data 112 and issues a printing command 113 to the printer 10.

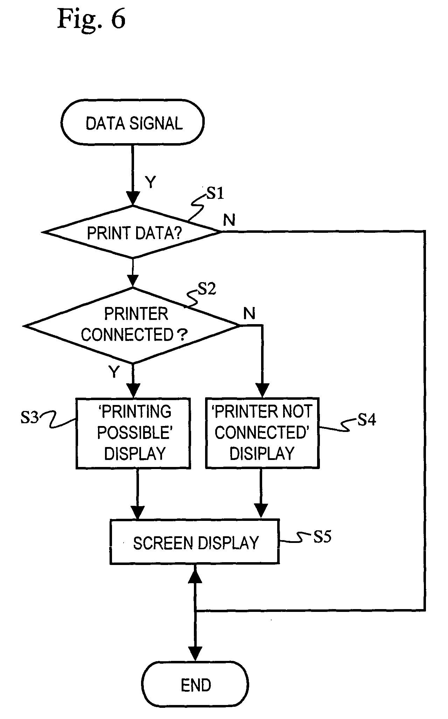

Using Fig. 6 as a reference, the operation of each of the components in this kind of construction will be explained in detail using a concrete example. Here, the case of transmitting a detailed recipe for a dish that is being used on a cooking program as print data will be used.

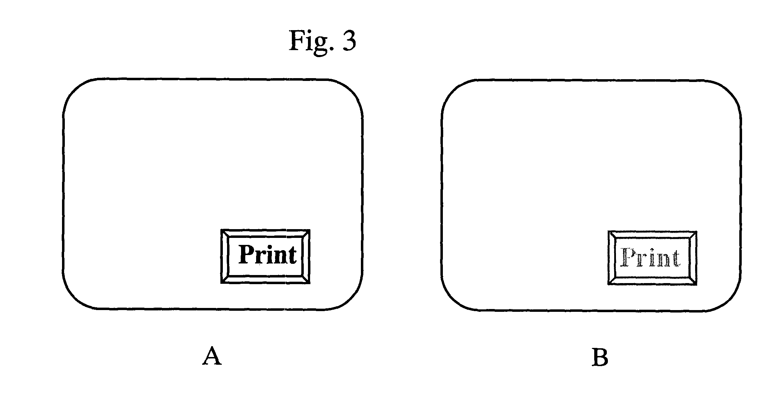

The print data is multiplexed with the audio signal and video signal of the program and sent. During the program, the ingredients and the cooking procedure for the dish are introduced. At the same time, these details are provided in a data signal as print data to be printed. These multiplexed signals are received by the tuner 1 and divided by the demultiplexing unit 2 into the audio signal 102, video signal 103 and data signal 104, which is the print data, for the program. In the case where the data signal is encoded, it is converted to a decoded data signal 107 by the decoding unit 5. After the print data-detection unit 8 receives the decoded data signal 107, it determines whether or not that data is print data (step S1). When the decoded data signal 107 is not print data, no operation is performed. When the decoded data signal 107 is print data, a printer-detection instruction 114 is issued to the printer-detection unit 9, and whether or not there is a printer connected is checked (step S2). Here, since the printer 10 is not generally connected or disconnected often, it is possible to just periodically monitor the connection, and to check that result. When the printer-detection unit 9 is able to confirm that the printer is connected, it transmits the result 108 to the printing-control unit 11. When the printer could not be detected, the fact that the printer was not detected is transmitted to the printing-control unit 11. When the printer 10 is detected, the printing-control unit 11 transmits a printing-allowed signal as the printing-allowed/not-allowed signal 109 to the combination unit 12, and when the printer 10 is not detected, it transmits a printer-not-connected signal as the printing-allowed/ not-allowed signal 109. After the combination unit 12 receives the printing-allowed signal, it combines the printing-possible display with the video signal to indicate that printing is possible (step S3), and after the combination unit 12 receives the printer-not-connected signal, it combines the printing-not-possible signal with the video signal to indicate that printing is not possible (step S4). Also, as shown in Fig. 3A, when the printer is detected, the print button is displayed in black (step S5), and when the printer is not detected, the print button in displayed in gray (step S5). When there is no print data, the latter display is also not displayed.

Also, at the same time, the printing-control unit 11 activates the printing instruction received from the printing-instruction-receiving unit 13 when the printer is connected, and deactivates it when the printer is not connected. It is possible for the printing-instruction receiving unit 13 to be activated by operation of the cursor or the like on the screen, or could also be activated by input from a remote control device. Here, the printing-instruction-input unit will not be explained in detail. After the printing-control unit 11 receives a printing instruction when the printer is connected, it analyzes the print data, and sends the print data to the printer in a format that can be interpreted by the printer.

Here, the same effect can be obtained by transmitting the detection result from the printer-detection unit 9 to the print data-detection unit 8.

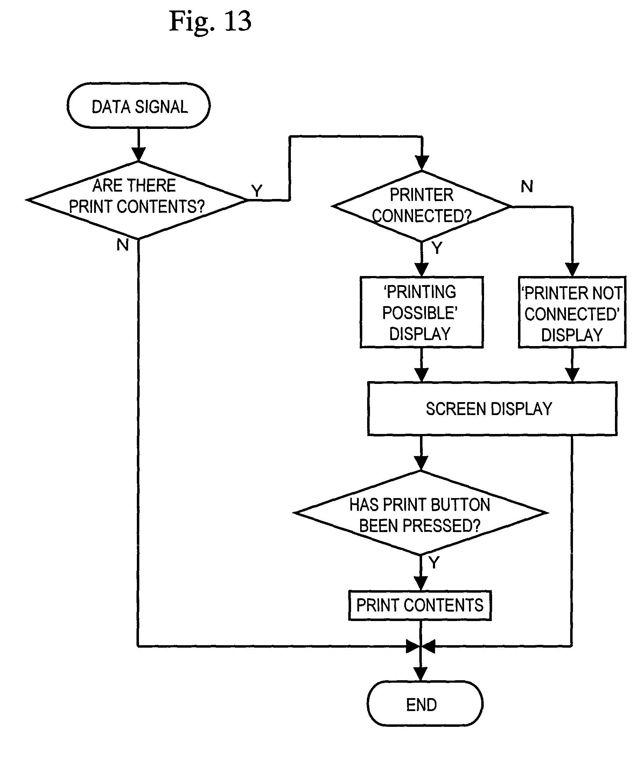

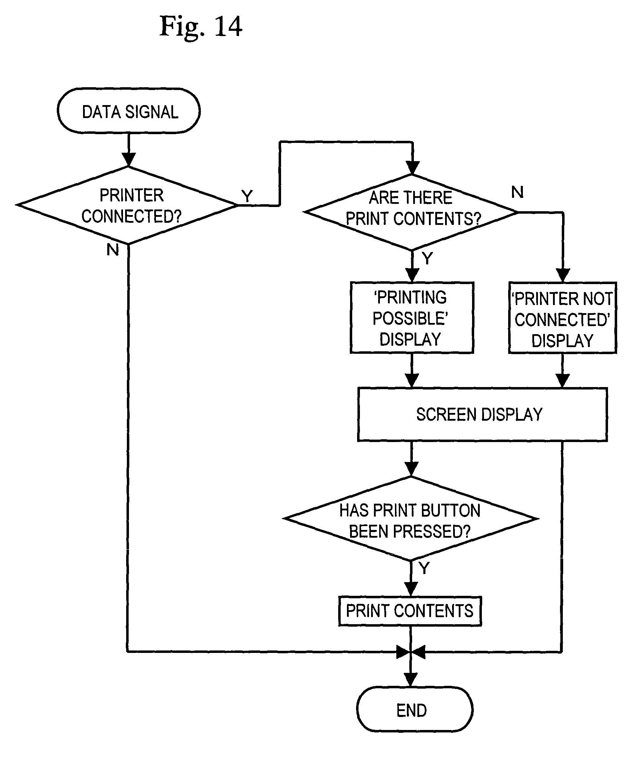

In other words, above, as shown in Fig. 13, detection of the printer by the printer-detection unit 9 after the print data was detected by the print data-detection unit 8 was explained, however, as shown in Fig. 14, the same effect can also be obtained by transmitting the detection result from the printer-detection unit 9 to the print data-detection unit 8.

Furthermore, the printer-detection unit 9 detects the printer connection when a data signal is received, however, the invention is not limited to this. In other words, it is also possible to use a means for performing polling at set periods such as normally used by an interface such as a USB interface, or a method of checking the printer connection when the power is turned ON and storing the result, and then using that when printing.

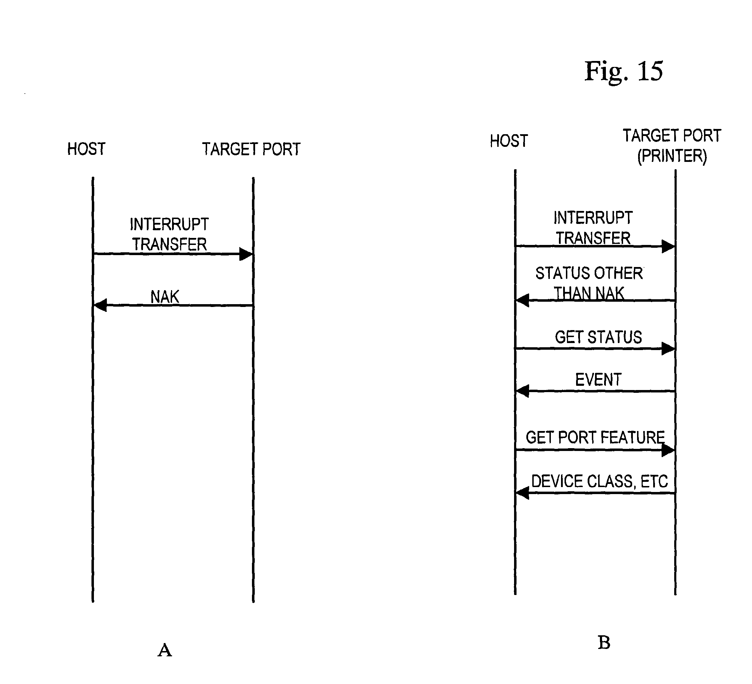

Also, as shown in Figs. 15A and 15B, the printer-detection unit 9 can issue a specified command to the port to which the printer is connected, and to detect whether or not a device is connected by watching the change in the response to that command. That is, when some kind of device is connected as shown in Fig. 15B, it is possible to identify that device by looking at the status of the type (such as the device class). This technique is also used for an interface such as a USB interface.

Furthermore, when the printer-detection unit 9 receives a data signal and the printer is connected, it is possible to turn ON the power to the printer at the timing that the data signal is received, or to set the printer status to Stand-By.

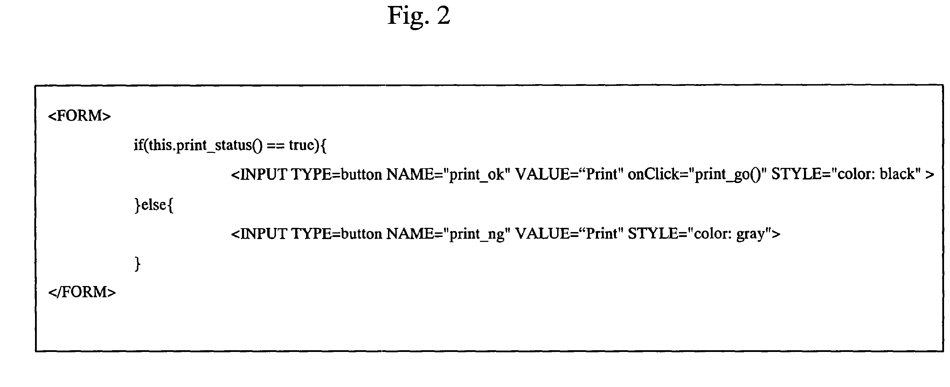

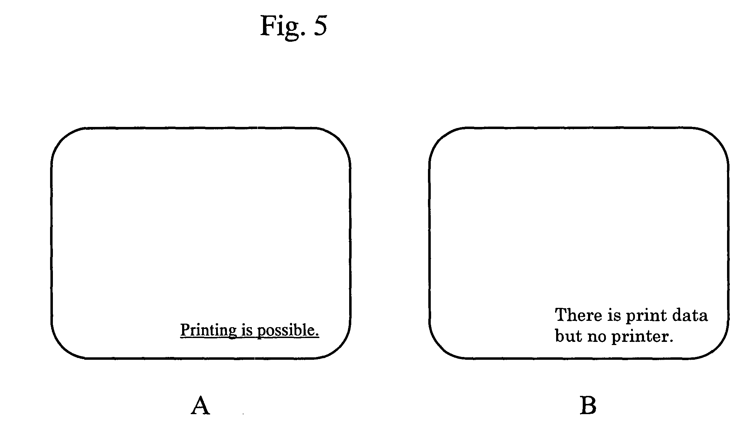

Also, instead of the button display, it is possible to display the text 'Printing is possible' as shown in Fig. 5A when the printer is connected, and for printing to start when the text area is clicked, or to display the text 'There is print data, but no printer' as shown in Fig. 5B when the printer is not connected. These can be controlled comparatively easily as desired on the side that sends data, in the case of a digital television data broadcast. For example, as shown in Fig. 2, by defining a script function print_status() in the browser that returns whether or not there is a printer as a return value, branches for different display colors and operations are entered in the BML file, where the data broadcast contents are entered, according to the return value of that script function. Also, the event of pressing the button is correlated with the script function print_go() for the print button attribute entered for the branch for when there is a printer. By doing this, as shown in Figs. 3A and 3B, when the printer is connected, printing is executed when the print button is pressed, and when the printer is not connected, the print button is displayed in gray and no operation is performed even though the button is pressed.

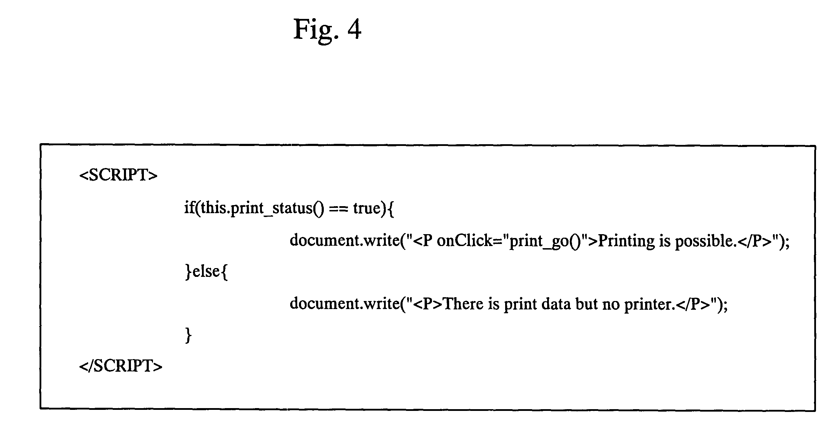

Also, even in the case of displaying a text area, as shown in Fig. 4, it is possible to write an entry in the BML file in which the data broadcast contents are entered that branches to the display 'Printing is possible' and the display 'There is print data but no printer' according to the return value of the script function print_status(). In this case also, it is possible to correlate just the display 'Printing is possible' with the printing-execution script. As shown in Figs. 5A and 5B, the digital television display result in that case is a display that the printing operation is executed only when the display 'Printing is possible' in the text area is pressed.

BML is the XML (extended Markup Language) application language for the data broadcast entry called Broadcast Markup Language. The basic entry format can be expressed in conformance with XML language specifications. In other words, similar to HTML contents being displayed on the display of a personal computer by using a browser that interprets HTML (Hyper Text Markup Language), BML contents are typically displayed on a monitor by using a browser that interprets BML. The monitor is the display apparatus itself, and the browser is an application for the data-broadcast display that is displayed on the monitor.

With the construction described above, it is possible for a user that does not have a printer connected to also know that there is print data in the data broadcast, and it is possible to avoid problems such as trying to execute a printing instruction even though the printer is not connected.

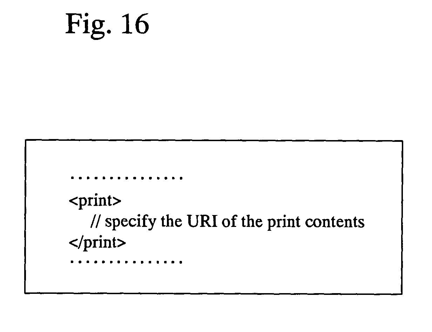

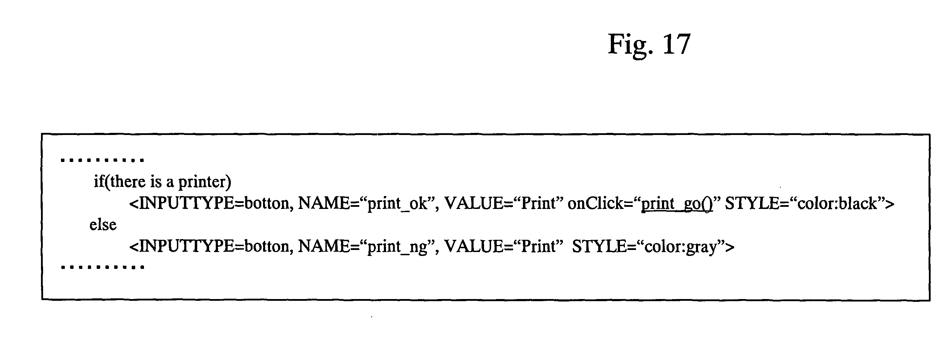

In this embodiment, the print data-detection unit performs judgment based on the printing-possible information in the broadcast data, however it is also possible to determine whether or not there is print data based on the mounting capability of a broadcast-receiving apparatus for which there is no related flag information, for example, based on whether or not there is a font corresponding to the specified language. Also, detection of the print data can be performed by searching for a tag included in the data broadcast signal, such as the printing tag shown in Fig. 16, or by searching for a printing instruction in the data broadcast signal shown by the underlined section in Fig. 17. This is based on the premise that there is a print button or that the print button can be pressed, and naturally that there is also print contents.

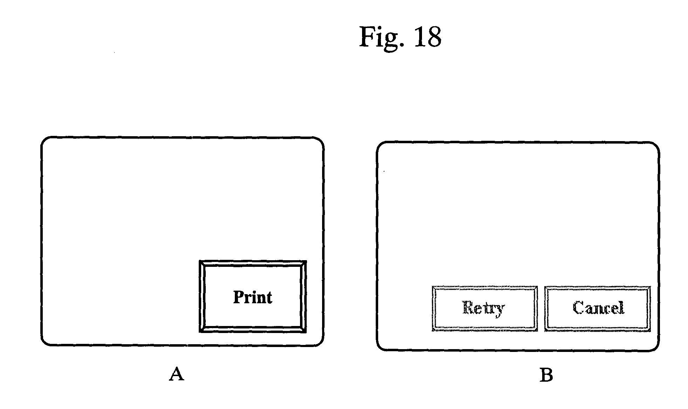

Also, when the printer is connected, similar to the example described above, it is possible to display a print button as shown in Fig. 18A, and when the printer is not connected, it is possible to display a selection screen that contains a retry button and cancel button as shown in Fig. 18B. The user uses the retry button or cancel button on the selection screen to select whether or not to retry detecting the printer. When the cancel button is pressed, printing of the print contents data is stopped without trying to detect the printer again. When the retry button is pressed, detection of the printer connection is performed again. When the printer connection is confirmed, printing of the print contents data is executed.

Instead of displaying this kind of selection screen when no printer is connected, it is also possible to automatically try detecting the printer again after a set amount of time elapses from that detection. In this case as well, when the printer connection is confirmed after detection as been performed again, printing of the print contents data is executed. When the printer connection cannot be confirmed even after performing detection of the printer again after a specified amount of time has elapsed, detection of the printer is performed again, and when the printer connection is still not confirmed after performing printer detection again for a specified number of times, printing of the print contents can be stopped.

As described above, when the printer is not connected, by executing printing of the print contents data when the printer is detected after performing detection of the printer again, so even in the case where the printer cable has become disconnected, by connecting the cable, it is possible to perform printing the same as when performing normal printing.

Moreover, display of the print button is not limited to that of the explanation above. That is, when a program of a data broadcast is displayed, it is also possible to display a print button together with the display of print contents data, which is data that is displayed separately from this program broadcast, or it is also possible to display the print button without displaying the print contents data.

Also, in this embodiment, when the print data is detected and also the printer is detected, the print button is displayed in black, and when the print data is detected but the printer is not detected, the print button is displayed in gray, however the invention is not limited to this, and it is possible to display a specified mark on the display screen when print data is detected but a printer is not detected. This specified mark can be a simple graphic symbol, or can be text that is not related to printing. Also, the specified mark can be the same as other marks, text or graphic symbols but have a different color. By displaying this specified mark only when print data is detected but the printer is not detected, it is possible for the user to know that the printer is not connected even though there is print data, according to whether or not the specified mark is displayed. Furthermore, instead of displaying the specified mark only when print data is detected and the printer is not detected, it is possible to play a specified sound or melody. By playing a specified sound or melody or performing some other kind of notification in this way, it is possible for the user to know that the printer is not connected even though there is print data.

Also, in this embodiment, the printer-detection unit 9 detects whether or not the printer is connected, however the invention is not limited to this. Even though the printer is connected, there is a possibility that that printer is an unusable printer and is in a state such that it cannot print the print data. For example, when the necessary amount of paper is not set in the printer, or when there is not enough coloring agent such as ink or toner, or when the printer is not plugged into the power outlet, that printer cannot print the print data even though it is connected. Therefore, by detecting whether or not paper is set in the printer, it is possible for the printer-detection unit 9 to detect a usable printer that is in a state such that it can print the print data.

Also, in this embodiment, a system comprising a STB, speakers and monitor was described, however it is clear that the same results can be obtained by a system comprising just a television receiver having a internal STB function, or a monitor with no speakers.

### (Second Embodiment)

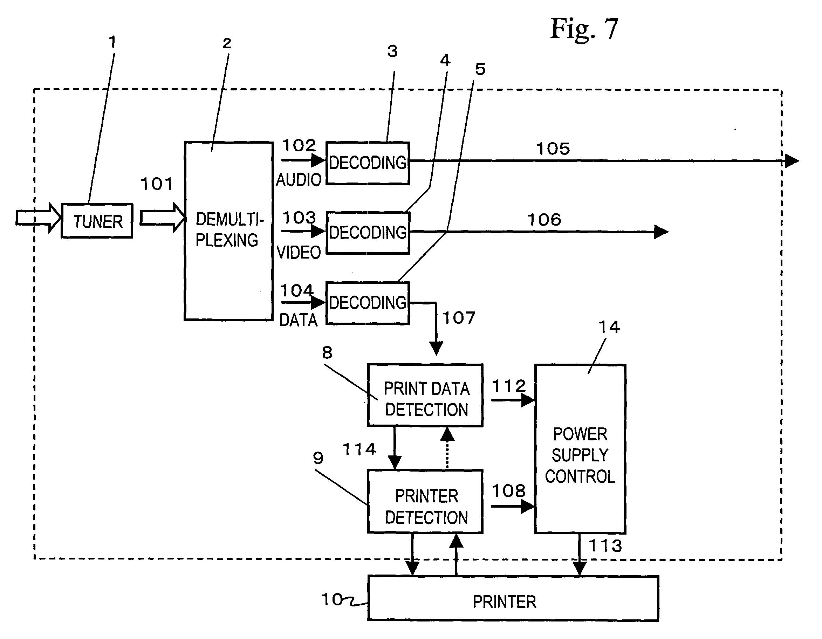

Fig. 7 is a schematic drawing explaining the system of a second embodiment of the invention. A tuner 1 receives a digital television broadcast signal and selects the desired channel. The received signal 101 of the selected channel is divided by a demultiplexing unit 2 into an audio signal 102, video signal 103 and data signal 104. The audio signal 102 and video signal 103 are encoded, so they are decoded by decoding units 3, 4 into an output audio signal 105 and output video signal 106, and are respectively output to the speakers 6 and monitor 7. On the other hand, the print data is sent as a data signal 104. The signal separated as a data signal 104 is also encoded and is decoded by a decoding unit 5 into a decoded data signal 107. In this second embodiment as well, in the case where the data signal is not encoded, it is not especially necessary to use the decoding unit 5. A print data-detection unit 8 receives the decoded data signal 107 and determines whether or not there is print data contained in the signal. A printer-detection unit 9 detects whether or not a printer is connected. A power-supply-control unit 14 turns ON the main power supply to the printer according to an instruction from the host.

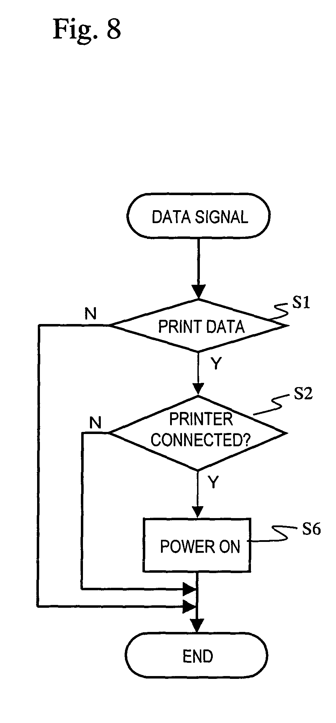

While referencing Fig. 8, the same example as was used for the first embodiment will be used to explain the flow of control of the second embodiment. The print data is multiplexed with the audio signal and video signal of the program and sent. In the program the ingredients and cooking procedure for a dish are introduced. At the same time, print data for printing these detailed contents is provided as a data signal. The tuner 1 receives these multiplexed signals, and the demultiplexing unit 2 divides the signal into the audio signal 102 and video signal 103 for the program, and a data signal 104, which is the print data. When the data signal 104 is encoded, the encoding unit 5 converts it to a decoded data signal 107. After receiving the decoded data signal 107, the print data-detection unit 8 determines whether or not the data is print data (step S1). When the decoded data signal 107 is not print data, no operation is performed. When the decoded data signal 107 is print data, a printer-detection-instruction 114 is issued to the printer-detection unit 9 to check whether or not the printer is connected (step S2). When the printer-detection unit 9 is able to confirm that the printer is connected, then the power-supply-control unit 14 turns ON the main power supply to the printer (step S6). When the printer connection cannot be confirmed, no operation is performed. At this time, it is necessary that the ON/OFF control for the main power supply to the printer be able to be performed externally. Also, even while the main power supply is OFF, power must flow through a minimum amount of circuits for the start-up instruction from the outside or connection ID response.

In this embodiment, the timing for turning OFF the power is not described, however it is possible to set it turn OFF after a series of printing operations is complete or when there is no printing or instructions after a set amount of time. However, in the case of the former, there are times when the next printing instruction will be received immediately after a printing operation is complete, so normally a time-out process is performed as in the latter case.

With this kind of construction, control for turning power to the printer ON/OFF is performed as necessary, so it is possible to contribute to saving energy.

Here, instructions from the host can be an instruction from the user by way of a user interface, an instruction from the provider of the print contents or a signal of the received detection results from the printer-detection unit.

### (Third Embodiment)

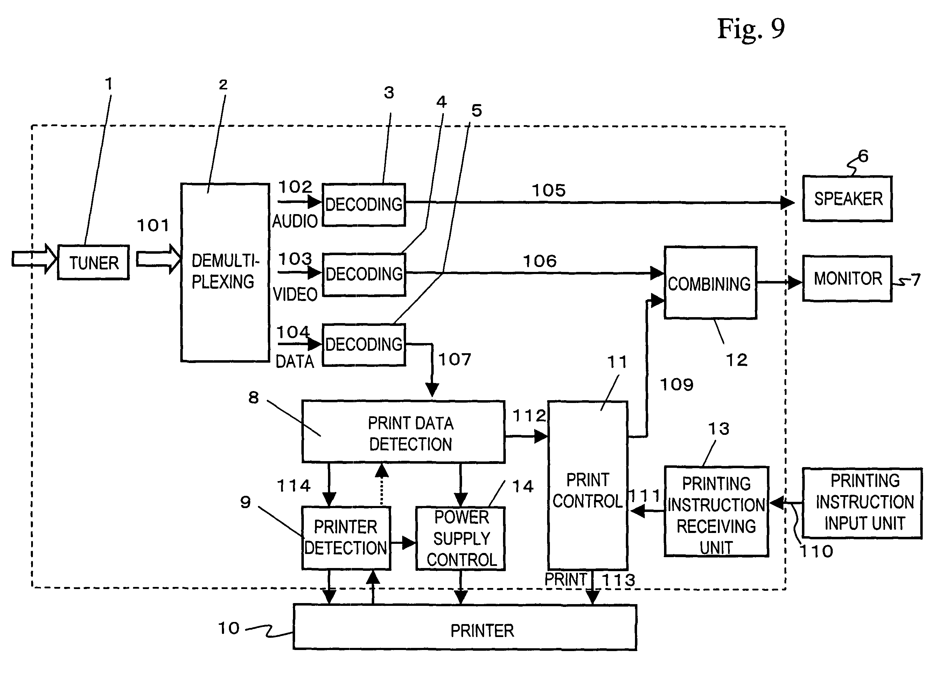

Fig. 9 is a schematic drawing for explaining the system of a third embodiment of the invention. A tuner 1 receives a digital television broadcast signal and selects the desired channel. The received signal 101 of the selected channel is divided by a demultiplexing unit 2 into an audio signal 102, video signal 103 and data signal 104. The audio signal 102 and video signal 103 are encoded, so they are decoded by decoding units 3, 4 into an output audio signal 105 and output video signal 106, and are respectively output to the speakers 6 and monitor 7. On the other hand, the print data is sent as a data signal 104. The signal separated as a data signal 104 is also encoded and is decoded by a decoding unit 5 into a decoded data signal 107. As in the embodiments described above, in the case where the data signal is not encoded, it is not especially necessary to use the decoding unit 5. A print data-detection unit 8 receives the decoded data signal 107 and determines whether or not there is print data contained in the signal. When there is print data contained in the decoded data signal 107, a printer-detection unit 9 detects whether or not a printer 10 is connected. A power-supply-control unit 14 turns ON the main power supply to the printer according to an instruction from the host. When the printer 10 is detected, the printing-control unit 11 outputs a printing-allowed signal as the printing-allowed/not-allowed signal 109, and the combination unit 12 combines the print button with the output video signal 106 and outputs it to the monitor 7. The printing-instruction receiving unit 13 receives a printing instruction 110 from the user and transmits a printing instruction 111 to the printing-control unit 11. After the printing-control unit 11 receives the printing instruction 111, it analyzes the print data 112 and issues a print command 113 to the printer 10.

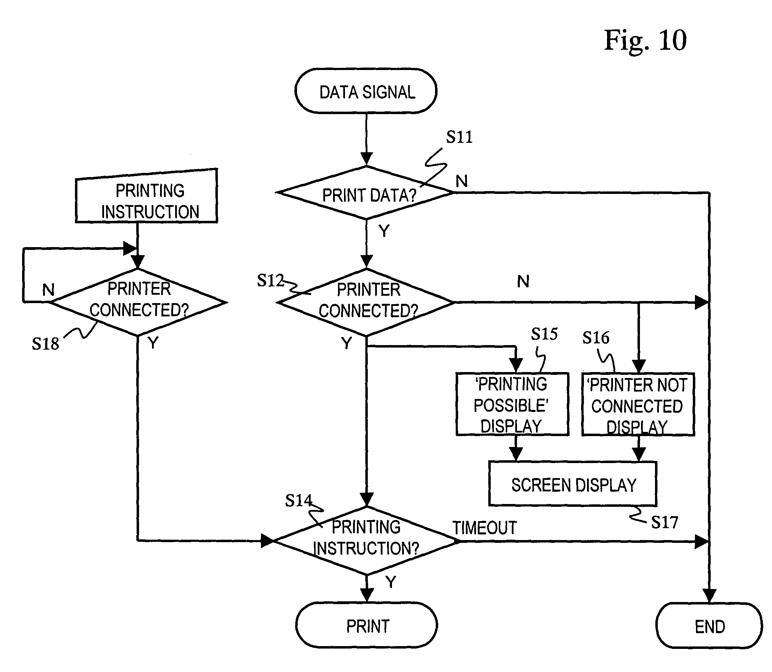

While referencing Fig. 10, the flow of the control of this third embodiment will be explained for the same example as that used for the first embodiment. The print data is multiplexed with the audio signal and video signal of the program and sent. In the program, the cooking ingredients and procedure for making the dish are introduced. At the same time, print data for printing these detailed contents is provided as a data signal. These multiplexed signals are received by the tuner 1, and the demultiplexing unit 2 divides the signals into the audio signal 102 and video signal 103 of the program, and a data signal 104, which is the print data. In the case where the data signal 104 is encoded, the decoding unit 5 converts it to a decoded data signal 107. After the print data-detection unit 8 receives the decoded data signal 107, it determines whether or not that data is print data (step S11). When the decoded data signal 107 is not print data, no operation is performed. When the decoded data signal 107 is print data, a printer-detection instruction 114 is issued to the printer-detection unit 9 to check whether or not a printer is connected (step S12). When the printer detection unit 9 is able to confirm that a printer is connected, it turns ON the main power supply to the printer (step S13). At the same time, the combination unit combines the 'printing possible' display with the video signal and displays it on the monitor (step S15). When a printer connection is not confirmed, the combination unit combines the 'printer not connected' display with the video signal and displays it on the monitor (step S16). As shown in Figs. 3A and 3B, as the 'printing possible' display it is possible to display a print button whose text is in black when the printer is detected, and as the 'printer not connected' display it is possible to display a print button whose text is in gray.

Also, it is determined whether or not the printer is connected (step S18), and when the printer is connected, the signal input from the printing-instruction-input unit is activated, and when the printer is not connected, the signal input from the printing-instruction-input unit is deactivated. Also, after the printing-control unit 11 receives the printing instruction when the printer is connected (step S14), it analyzes the print data and sends the print data to the printer in a format that can be interpreted by the printer. When there is no printing instruction, processing waits for a set amount of time and then a time-out process is performed, or as soon as the broadcast ends, the process is initialized by performing a process for deactivating the print data.

The printing-instruction-receiving unit 13 can also be realized by an operation such as a cursor operation on the screen, or by input from a remote control or the like. Here, the printing-instruction-input unit is not described in particular detail. Furthermore, it is necessary that the ON/OFF control for the main power supply to the printer be able to be performed externally. Also, even while the main power supply is OFF, power must flow through a minimum amount of circuits for the start-up instruction from the outside or connection ID response.

With this kind of construction, it is also possible for a user who does not have printer connected to know that there is a printing broadcast in the data broadcast. Also, it is possible to avoid problems such as trying to execute a printing instruction even though the printer is not connected. Furthermore, when there is no print data when not in use, it is possible to minimize power consumption by the printer by controlling the power supply.

### (Fourth Embodiment)

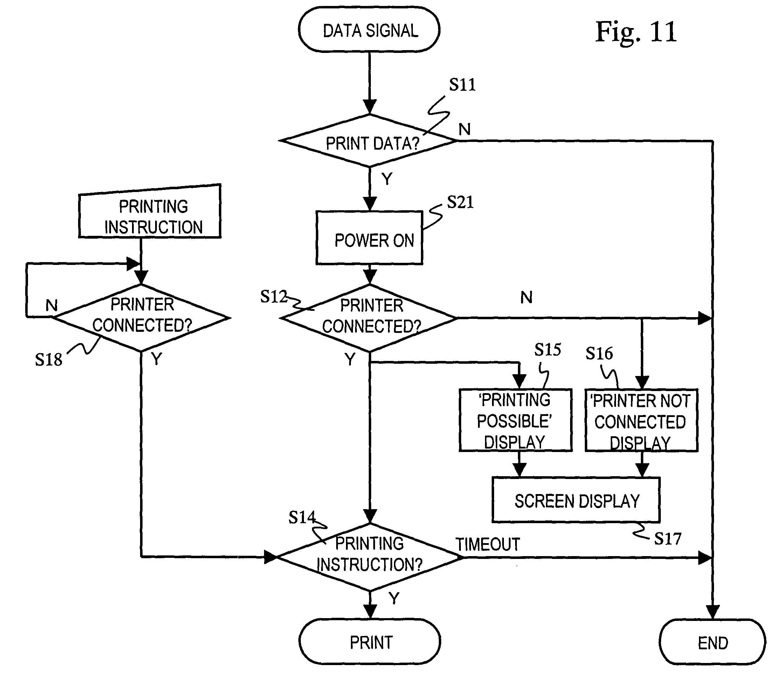

Next, the operation of a fourth embodiment of the invention will be explained. The construction is the same as that of the third embodiment, so an explanation of it is omitted. Fig. 11 will be used to explain the flow of control. Explanations of parts that are identical with those of the third embodiment will be omitted, and only parts that are different will be explained.

When determining whether or not the decoded data signal 107 is print data (step S11) and it is determined that it is print data, the main power supply to the printer is turned ON (step S21). After that, a printer-detection instruction 114 is issued to the printer-detection unit 9 to check whether or not the printer is connected (step S12). When the printer-detection unit 9 is able to confirm that the printer is connected, the process waits for a printing instruction, and the combination unit combines the 'printing possible' display with the video signal (step S15) and displays it on the monitor (step S17). However, when the printer connection is not confirmed, the combination unit combines the 'printer not connected' display with the video signal (step S16) and displays it on the monitor (step S17).

Also, when determining whether or not the printer is connected (step S18), and the printer is connected, the signal input from the printing-instruction-input unit is activated, and when the printer is not connected, the signal input from the printing-instruction-input unit is deactivated. Also, after the printing-control unit receives the printing instruction when the printer is connected (step S14), it analyzes the print data, and sends the print data to the printer in a format that the printer can interpret. When there is no printing instruction, processing waits for a set amount of time then a time-out process is performed, or as soon as the broadcast ends, the process is initialized by performing a process to deactivate the print data.

With this kind of construction, confirmation of the printer connection can be done by a response after the main power to the printer is turned ON, so when the main power is turned OFF, it is possible for just a circuit that monitors the power ON/OFF control to operate, making it possible to conserve power when waiting.

### (Fifth Embodiment)

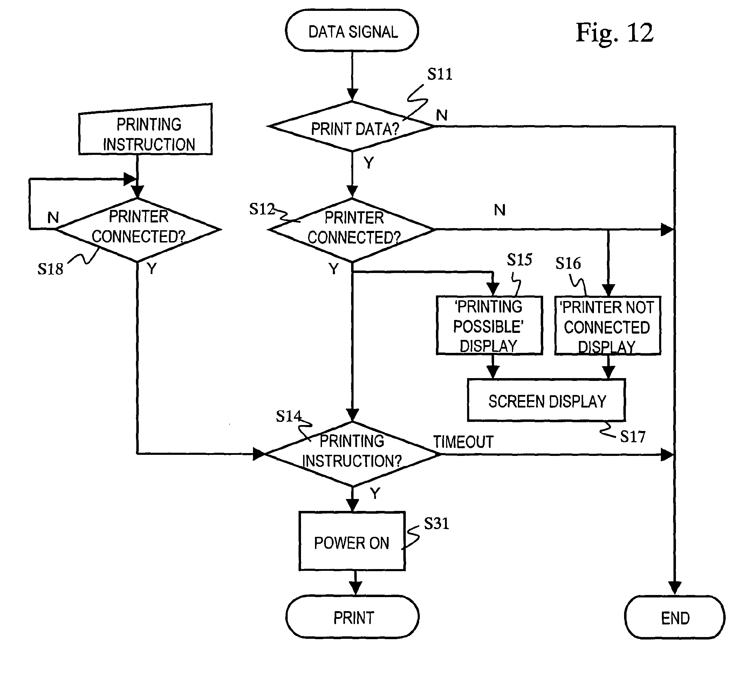

Next, the operation of a fifth embodiment of the invention will be explained. The construction is the same as that of the third embodiment, so an explanation of it is omitted. Fig. 12 will be used to explain the flow of control. Explanations of parts that are identical with those of the third embodiment will be omitted, and only parts that are different will be explained.

When determining whether or not the decoded data signal 107 is print data (step S11) and it is determined that it is not print data, no operation is performed. When the decoded data signal 107 is print data, a printer-detection instruction 114 is issued to the printer-detection unit 9 to check whether or not the printer is connected (step S12). When the printer-detection unit 9 is able to confirm that the printer is connected, the process waits for a printing instruction, and the combination unit combines the 'printing possible' display with the video signal (step S15) and displays it on the monitor (step S17). However, when the printer connection is not confirmed, the combination unit combines the 'printer not connected' display with the video signal (step S16) and displays it on the monitor (step S17). Also, when determining whether or not the printer is connected (step S18) and the printer is connected, the signal input from the printing-instruction-input unit is activated, and when the printer is not connected, the signal input from the printing-instruction-input unit is deactivated. Also, after the printing-control unit receives the printing instruction when the printer is connected (step S14), it turns ON the main power supply to the printer (step S31). After that, it analyzes the print data and sends the print data to the printer in a format that the printer can interpret. When there is no printing instruction, processing waits for a set amount of time then a time-out process is performed, or as soon as the broadcast ends, the process is initialized by performing a process to deactivate the print data.

With this kind of construction, when the printer connection is confirmed, the main power to the printer is turned ON at the instant that a printing instruction is issued, so in the case where there is print data but printing will not be performed, the main power is OFF, making it possible to conserve power even more when waiting.

The invention in each of the embodiments explained above can be applied to not only a set-top box, but also to a television receiver having speakers 6 and monitor 7.

### (Sixth Embodiment)

When displaying the data broadcast on the monitor, normally an application called a browser is used to interpret the data-broadcast language and to display the data on the monitor. In the first to fifth embodiments, a method of displaying a new print button on the display screen was explained, however in this sixth embodiment, a method is explained in which the print button display of the browser itself is performed according to the contents of the data broadcast and whether or not the printer is connected, making it possible to obtain the effect of providing the user with a printing environment similar to that of the embodiments described above.

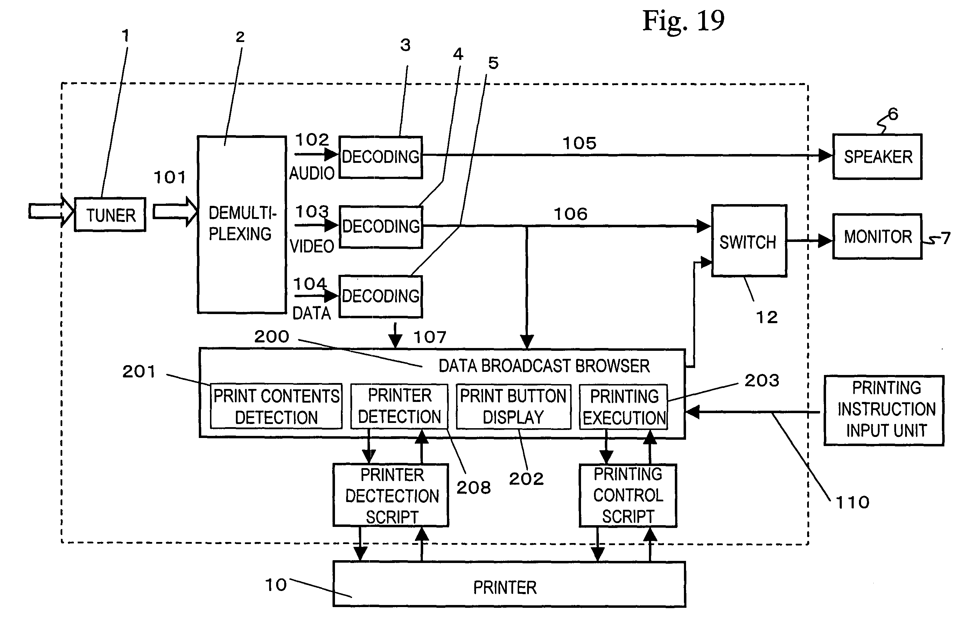

Fig. 19 is a schematic drawing of the system of this sixth embodiment of the invention. A tuner 1 receives a digital television broadcast signal and selects a desired channel. The received signal 101 that is received by the selected channel is divided by a demultiplexing unit 2 into an audio signal 102, video signal 103 and data signal 104. The audio signal 102 and video signal 103 are encoded, so they are decoded by decoding units 3, 4 into an output audio signal 105 and output video signal 106, and these signals are output from the speakers 6 and monitor 7, respectively. On the other hand, the data signal 104 is decoded into the data-broadcast language 107 and displayed on the monitor by way of the data-broadcast browser 200. Depending on the situation, the output video signal 106 may be combined with part of this data signal 104 and displayed on the monitor 7. Here, the data-broadcast browser 200 comprises a print contents-detection unit 201, for example, a unit such as described in the first embodiment that detects whether or not print contents are included in the data-broadcast language 107. Furthermore, the data-broadcast browser 200 comprises a printer detection unit 208, for example, a unit such as described in the first embodiment that detects the printer connection.

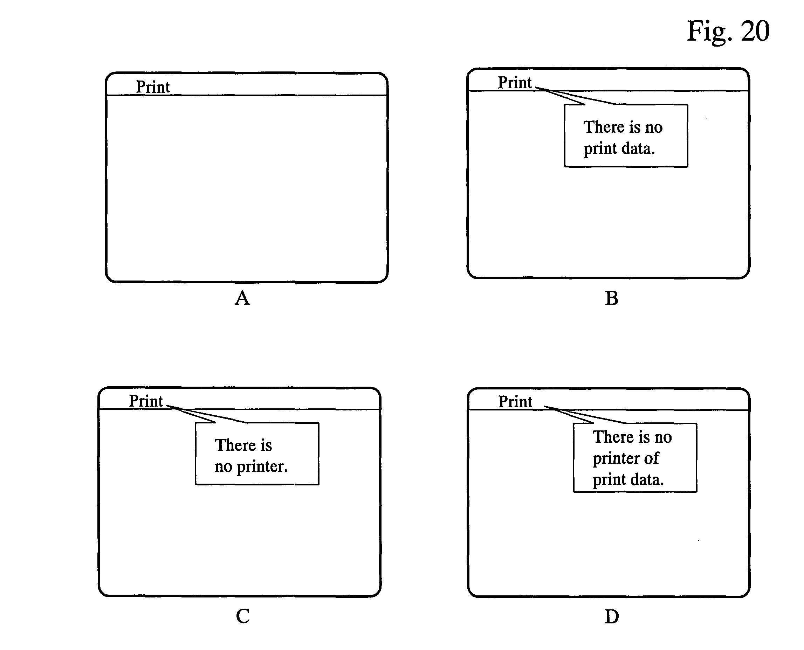

The data-broadcast browser 200 has a print button on the display screen as shown in Fig. 20A, and when there are print contents and the printer is connected, the printing-execution unit 203 executes printing when this print button is pressed. When the print button is pressed and there are no print contents, the pop-up screen, 'There is no print data', is displayed as shown in Fig. 20B. Also, when the print button is pressed even though the printer is not connected, the pop-up screen, 'There is no printer' will be displayed as shown in Fig. 20C. Moreover, when the print button is pressed and there are no print contents or printer, the pop-up screen, 'There is no printer or print data' will be displayed as shown in Fig. 20D. By equipping the data-broadcast browser 200 with this kind of function, it is possible to notify the user of what the status is when the user presses the print button.

It is preferred that the print button be displayed in black when the print contents-detection unit 201 detects print contents, and be displayed in gray when print contents are not detected. By doing so, it is possible to notify the user of whether or not there are print contents without having to press the print button.

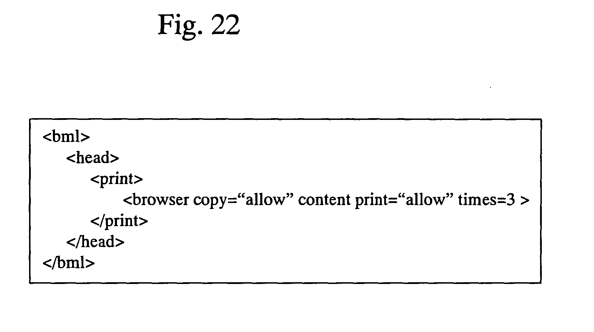

Furthermore, not only are print contents detected, but when printing the browser display screen (described later) or printing a hard copy of the monitor display screen (described later), a tag indicating whether to allow or not allow printing of the browser display screen or monitor display screen is stored in the broadcast data (or more specifically, as shown in Fig. 22, the printing-authorization attribute is stored in the BML). By doing so, it is possible for the data-broadcast browser 200 to determine whether or not it is okay to print the browser-display screen.

Here, printing of the browser display screen is printing even the part that cannot be viewed on the screen and that can be viewed by scrolling. In other words, when printing the browser-display screen, all of the contents are printed even though the displayed contents are only part of the contents. Also, authorization to print the browser display screen means printing part or all of the contents displayed by the browser.

On the other hand, printing the hard copy of the monitor-display screen is printing of the entire screen that is displayed on the monitor. Also, authorization to print the hard copy of the monitor display screen means printing a hard copy of the screen displayed on the monitor without the data for which printing is not allowed being display (for example, when part of certain data is not allowed to be printed, the portion that is not allowed, is not displayed).

Therefore, when trying to print a hard copy of a screen when the browser displays data of which part is not allowed to be printed, since there is a portion in the displayed data that is not allowed to be printed, it is possible to not allow printing a hard copy of that screen. By establishing a flag indicating whether or not the contents displayed on the monitor are allowed to be printed, and by checking this flag during printing, determination by the STB is possible. When a hard copy of the browser display screen or monitor display screen is made, the print-button-display-control unit 202 determines whether or not printing is allowed or not allowed, and according to the judgment results, the print-button-display-control unit 202 performs control to switch the print button display. By doing this, it is possible to notify the user whether or not it is possible to print the browser display screen or monitor display screen, and print the contents. In the case of the tag shown in Fig. 22, it is allowed to print both the browser display screen and contents, however, printing the contents is limited to three times. Also, while those contents are displayed, printing a hard copy of the monitor display screen is allowed the same as printing of the browser display screen.

When the contents are indicated to be print contents, having print contents itself is authorization for printing, however, in the case of print contents that are not indicated as print contents (for example printing of the browser display screen), a printing allowed/not-allowed flag serves an important function for protecting the copyright of the contents. Furthermore, displaying this flag and whether or not printing can be executed (for example, whether or not the printer is connected), is significant in that it can provide a user-friendly interface for a user that does not know whether or not it is okay to print.

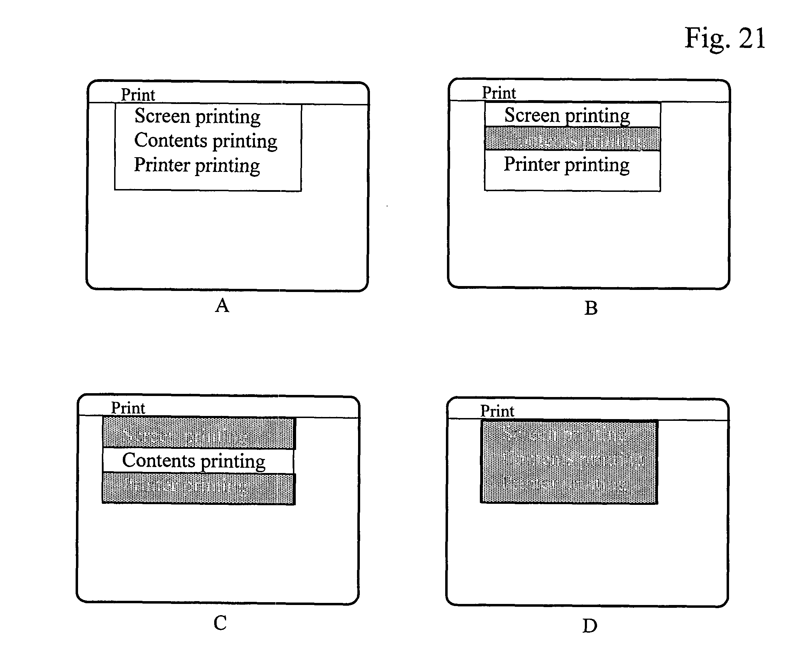

Furthermore, instead of notifying the user on a pop-up screen of the operation when the print button is pressed, the same effect can be obtained by changing the color of the print button as shown in Figs. 21A to 21D, or by displaying the print contents status or printer-connection status. For example, when there are print contents and the printer is connected, the screen-print button, contents-print button and printer property are displayed in black (Fig. 21A). Here, the screen-print button is a button for printing the image displayed by the browser, the contents-print button is a button for printing the print contents specified by the data broadcast that are not displayed by the browser, for example, and the printer property is a button for performing settings related to printing such as the size of the paper, orientation, number of pages, and the like.

On the other hand, when there are no print contents but the printer is connected, the screen-print button and printer property are displayed in black, and the contents-print button us displayed in gray (Fig. 21B). Also, when there are print contents but the printer is not connected, the screen-print button and printer property are displayed in gray, and the contents-print button is displayed in black (Fig. 21C). Furthermore, when there are no print contents and the printer is not connected, the screen-print button, contents-print button and printer property are displayed in gray (Fig. 21D).

Also, by combining an icon indicating whether or not the printer is connected and an icon indicating whether or not there are print contents into one button, it is possible to graphically see the status of the printer connection and whether or not there are print contents, and similar to as described above, when this button having a combination of icons is pressed, it is possible to provide a user interface for printing that corresponds to the printer status and whether or not there are print contents. Not only is it possible to display whether or not there are print contents, but it is also possible to display an icon that includes whether printing is allowed or not.

This is just one example of the form of expression of this kind of browser. That is, the method of expressing the print button is a design feature of the browser, and it is clear that many forms of expression could be imagined.

Also, as a program with a data broadcast approaches the end, it is possible to change the display of the buttons in the browser in order to show that the print contents will to be lost from the STB and that printing will not be able to be printed. For example, by having buttons displayed as being active (for example a black display) start to flash 5 minutes before the program ends, and then making the buttons non-active (for example a gray display) when the program ends, the user is able to easy know the current status of the data that can be printed. Needless to say, a display technique related to the end of the program can be used together with a technique of displaying whether or not there is a printer connection in this, or it can be used separately, to provide a friendly screen display for the user.

### (Seventh Embodiment)

In each of the embodiments described above, examples were given of preparing a print button on the side receiving the data broadcast, however in this seventh embodiment, and example will be given in which it is possible for the side providing the printer data to freely set a button.

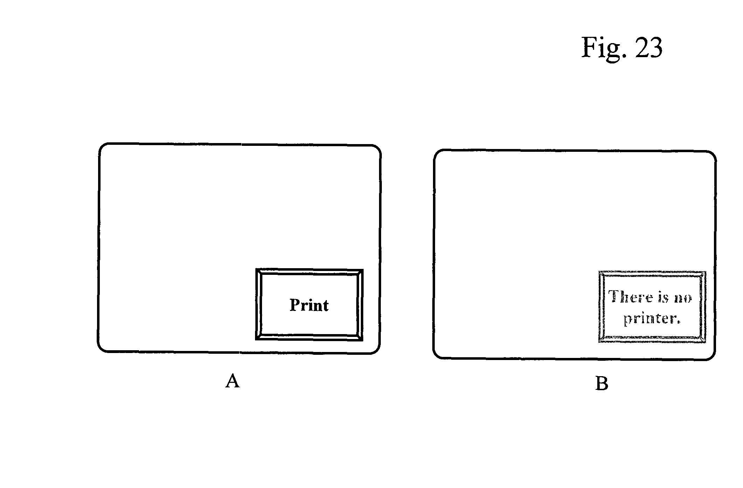

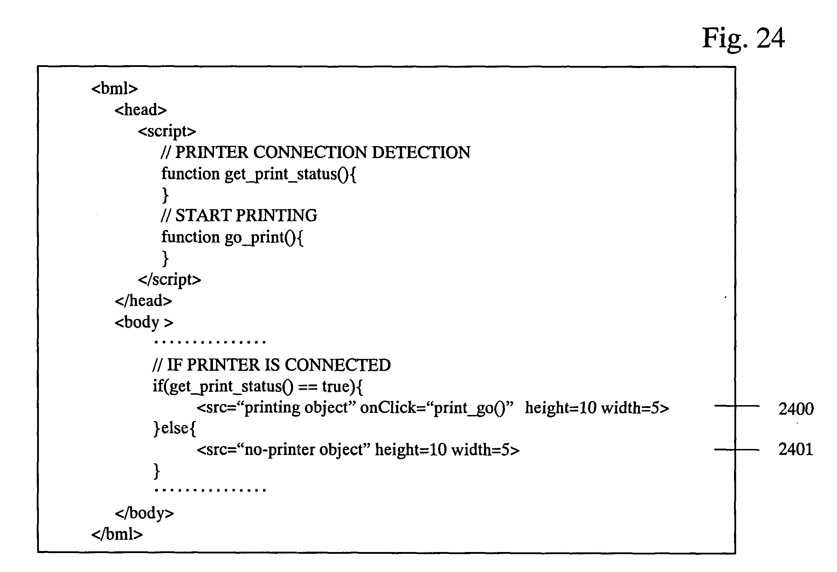

First, Figs. 23A and 23B show display examples of the print button of this embodiment that is prepared by the contents supplier. The operation is nearly the same as that described for the first embodiment, with the difference being that the display instruction or display contents are included in the data distributed from the contents supplier. Fig. 24 is one example of the BML in which that operation is entered.

When a contents provider has print contents that are linked to the data broadcast, the printer-connection-detection script (get_print_status()) is used and entered in the BML file so that the printer can be detected.

Moreover, when the printer is detected, the print button that is specified by the 'Print' object is displayed as shown in Fig. 23A, and when that print button is pressed, the printing script (go_print()) is executed, and the print contents are printed. The script corresponding to this operation is entry 2400 in Fig. 24.

On the other hand, when the printer is not detected, the button specified by the 'No Printer' object is displayed as shown in Fig. 23B. The script corresponding to this operation is entry 2401 in Fig. 24.

At this time, the form and design of the 'print button object' and 'no printer object' buttons can be specified and distributed by the contents provider. When doing that, the contents provider can distribute the button itself or the just format for setting the display form of the print button together with the information or contents indicating whether or not printing is possible.

By embedding the display data and instruction for executing printing in the data distributed by the contents supplier, it gives freedom to the contents supplier related to the display, and makes it possible to avoid having typical displays.

### (Eighth Embodiment)

In the seventh embodiment an example was given in which the side that distributes the data broadcast freely sets the print button, however in this embodiment, an example is given in which it is possible to prepare the button object on the printer side and to display a print button that is unique to the printer.

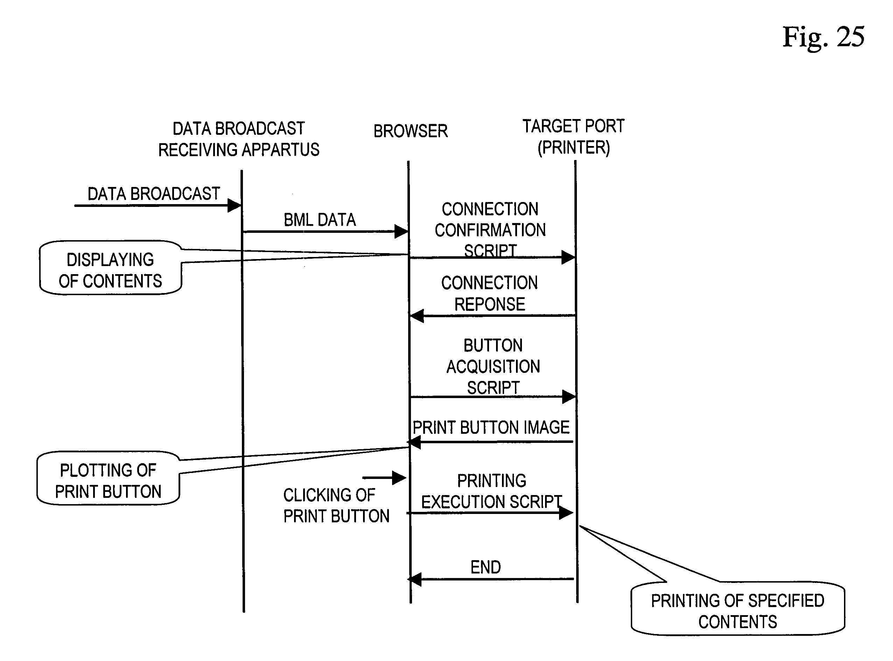

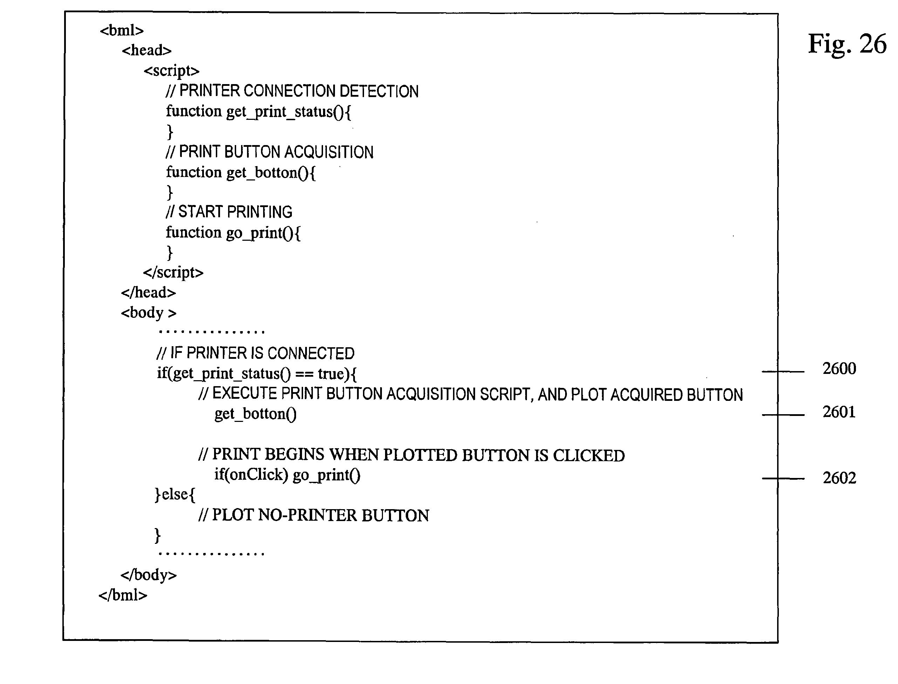

Fig. 25 is a fence chart showing the operation of this eighth embodiment of the invention, and Fig. 26 is an example of the data broadcast of this eighth embodiment. These figures will be used to explain the operation of this eighth embodiment.

First, the receiver that receives the data broadcast plots the contents using the browser. The contents can be print contents or some other contents.

Next, printer detection is performed according to the printer-connection-detection script. This script corresponds to entry 2600 in Fig. 26. The printer-detection unit is the same as that in the other previous embodiments.

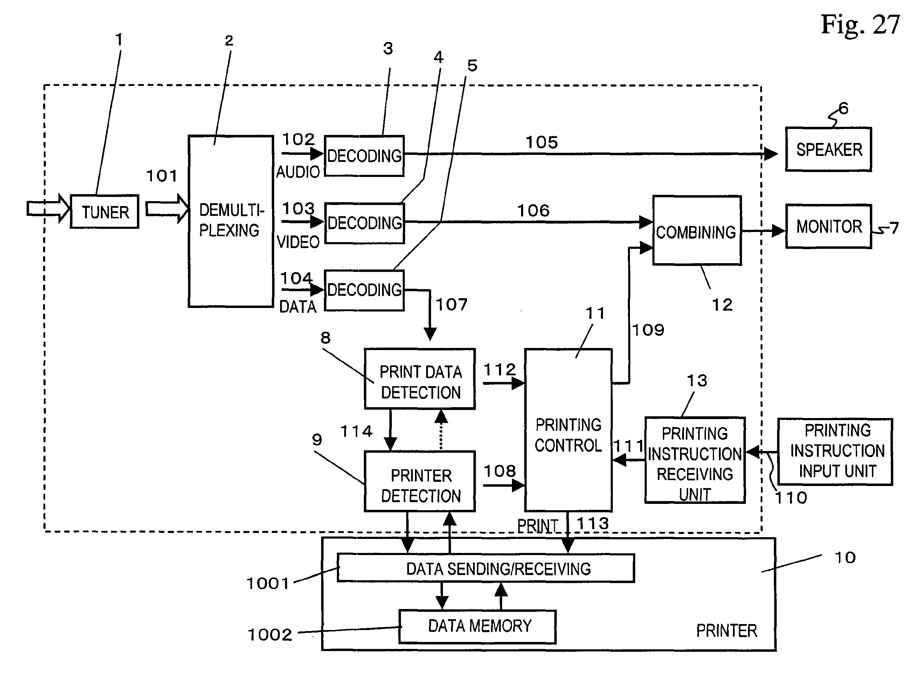

After the printer is detected, the print-button object is obtained from the printer according to the print-button-acquisition script. As shown in Fig. 27, the printer 10 comprises a data-sending/receiving unit 1001, which has both a sending unit and receiving unit for data, and this data-sending/receiving unit 1001 is used for receiving print data and various requests from the STB, and sends responses to the requests. According to entry 2601 in Fig. 26, when the STB requests the print-button object, the printer 10 receives that request by way of the data-sending/receiving unit 1001. The data-memory unit 1002 stores printing-control data that includes the print-button object, and the data-sending/receiving unit 1001 responds to the request by sending the print-button object obtained from the data-memory unit 1002 to the STB.

By doing this, the print-button object that is obtained as described above is plotted on the screen by the browser. When the user presses this plotted button, the print command that is specified by the print-start script is executed. This corresponds to entry 2602 in Fig. 26.

When the printer connection is not confirmed, a button indicating 'There is no printer' is displayed. This button can be entered in the contents, can be an attachment to the contents, or can be prepared by the browser.

Here, the print-button-acquisition script and print connection detection script where separate in Fig. 26, however the invention is not limited to this. In other words, the print button can be returned as the return value of the print-connection-detection script, or it is also possible to determine whether or not it is possible to get the print button and determine whether or not the printer connection can be detected using the same return value.

With this kind of construction that makes it possible to use data contained by the printer and display a screen for printing in this way, it is possible to provide a print button that is unique to the printer, and to display a screen having characteristics for each printer manufacturer or printer model.

In the embodiments above, an example of a data broadcast was given, however, the invention can be similarly applied in the case where the data handled by the STB is transmitted via the internet or the like. That is, the same effect as described above can be obtained when using an information-receiver that is capable of the same process as the STB.

Also, the apparatus of each of the embodiments described above can be realized by special circuits, or can be realized using software. By executing a program on a computer to perform steps corresponding to the functions of the apparatus, that computer can operate as an apparatus that is the same as the apparatus of each of the embodiments described above. This kind of data-broadcast-printing program and the script described above can be distributed over telecommunication lines such as the Internet, or can be distributed in a recorded form on a recording medium such as a CD-ROM that can be read by a computer.

With the construction explained above, it is possible to display on the screen using different expressions when printing is not possible because there is no printer even though there is print data, or when there is no print data itself, or when printing is possible. Also, by performing ON/OFF control of the power supply to the printer according to need, it is possible to contribute to saving energy.

## Claims

1. A data broadcast printing method comprising the steps of:
receiving a television broadcast signal;
performing detection of print data that is multiplexed with the television broadcast signal and of a printer; and
performing a specified notification only when the print data is detected however a printer is not detected.

2. A data broadcast printing method comprising the step of displaying a specified mark on a display screen only when print data is detected and a printer is not detected.

3. A data broadcast printing method comprising the steps of:
receiving a television-broadcast signal;
performing detection of print data that is multiplexed with the television-broadcast signal and of a printer; and
providing a 'printing possible' display on a display screen that displays the television-broadcast signal when the print data is detected and a printer is also detected to indicate that printing of the print data is possible; and providing a 'printing not possible' display on the display screen when the print data is detected but a printer is not detected to indicate that printing of the print data is not possible.

4. The data broadcast printing method of claim 3 wherein
not only is the 'printing not possible' display provided on the display screen when the print data is detected but a printer is not detected, but control is performed such that a printing instruction cannot be accepted even though there is a printing instruction.

5. The data broadcast printing method of claim 3 wherein after executing a power-ON instruction to the printer when the print data is detected and a printer is also detected, provides the 'printing possible' display on the display screen and has the printer print the print data when there is a printing instruction.

6. The data broadcast printing method of claim 3 wherein a power-ON instruction to the printer is executed after the print data is detected and before the printer is detected.

7. The data broadcast printing method of claim 3 wherein a power-ON instruction to the printer is executed when the print data is detected and the printer is also detected, and after there is a printing instruction, the printer prints the print data.

8. A data broadcast printing method comprising the steps of:
receiving a television-broadcast signal;
performing detection of print data that is multiplexed with the television-broadcast signal and of a printer; and
executing a power-ON instruction to the printer when the print data is detected and also a printer is detected.

9. A data broadcast printing system comprising:
a receiving unit that is operable to receive a television-broadcast signal;
a print data detection unit that is operable to detect print data that is multiplexed with the television-broadcast signal;
a printer detection unit that is operable to detect a printer; and
a printing control unit that is operable to perform a specified notification only when the print data is detected and also a printer is detected.

10. A data broadcast printing system wherein the printing control unit displays a specified mark on the display screen only when the print data is detected and a printer is not detected.

11. A data broadcast printing system comprising:
a receiving unit that is operable to receive a television-broadcast signal;
a print data detection unit that is operable to detect print data that is multiplexed with the television-broadcast signal; and
a printer detection unit that is operable to detect a printer; and wherein provides a 'printing possible' display on the display screen that displays the television-broadcast signal when the print data is detected and a printer is also detected to indicate that printing of the print data is possible; and provides a 'printing not possible' display on the display screen when the print data is detected but a printer is not detected to indicate that printing of the print data is not possible.

12. The data broadcast printing system of claim 11 wherein
a printing control unit not only provides the 'printing not possible' display on the display screen when the print data is detected but a printer is not detected, but does not accept a printing instruction even though there is a printing instruction.

13. The data broadcast printing method of claim 11 further comprising a printer power control unit that is operable to execute a power-ON instruction to the printer; and wherein
after a printing control unit executes a power-ON instruction to the printer by way of the printer power control unit when the print data is detected and a printer is also detected, provides the 'printing possible' display on the displays screen and has the printer print the print data when there is a printing instruction.

14. The data broadcast printing system of claim 11 further comprising a printer power control unit that is operable to execute a power-ON instruction to the printer, and wherein
the printer detection unit detects the printer after the print data is detected and a power-ON instruction to the printer is executed by the printer power control unit.

15. The data broadcast printing system of claim 11 further comprising a printer power control unit that is operable to execute a power-ON instruction to the printer, and wherein
a printing control unit has the printer print the print data after the printer power control unit executes a power-ON instruction to the printer when the print data is detected and the printer is also detected, and when there is a printing instruction.

16. A data broadcast receiver comprising:
a receiving unit that is operable to receive a television-broadcast signal;
a print data detection unit that is operable to detect print data that is multiplexed with the television-broadcast signal;
a printer detection unit that is operable to detect a printer; and
a printing control unit that is operable to perform a specified notification only when the print data is detected but a printer is not detected.

17. A data broadcast printing program that is executed by a computer to perform the steps of:
receiving a television-broadcast signal;
performing detection of print data that is multiplexed with the television-broadcast signal and of a printer; and
performing a specified notification only when the print data is detected but a printer is not detected.

18. A computer readable recording medium on which is recorded a data broadcast printing program that is executed by a computer to perform the steps of:
receiving a television-broadcast signal;
performing detection of print data that is multiplexed with the television-broadcast signal and of a printer; and
performing a specified notification only when the print data is detected but a printer is not detected.

19. A data broadcast printing system comprising:
a receiving unit that is operable to receive a television-broadcast signal;
a print data detection unit that is operable to detect print data that is multiplexed with the television-broadcast signal;
a printer detection unit that is operable to detect a printer; and
a printer power control unit that is operable to execute a power-ON instruction to the printer that prints the print data.

20. A data broadcast sending/receiving apparatus comprising:
a receiving unit that is operable to receive a television-broadcast signal;
a print data detection unit that is operable to detect print data that is multiplexed with the television-broadcast signal;
a printer detection unit that is operable to detect a printer; and
a printer power control unit that is operable to execute a power-ON instruction to the printer that prints the print data.

21. A data broadcast printing program that is executed on a computer for performing the steps of:
receiving a television-broadcast signal;
performing detection of print data that is multiplexed with the television-broadcast signal, and of a printer; and
executing a power-ON instruction to the printer when the print data is detected and also a printer is detected.

22. A computer readable recording medium on which is recorded a data broadcast printing program that is executed by a computer to perform the steps of:
receiving a television-broadcast signal;
performing detection of print data that is multiplexed with the television-broadcast signal, and of a printer; and
executing a power-ON instruction to the printer when the print data is detected and also a printer is detected.

23. A data broadcast printing method comprising the steps of:
receiving a television-broadcast signal;
performing detection of print data that is multiplexed with the television-broadcast signal, and of a printer; and
detecting the printer again when the print data is detected but a printer is not detected, and when the printer is detected, performing control to execute printing of the print data.

24. The data broadcast printing method of claim 23 wherein a selection screen is displayed on the display screen for selecting whether or not to perform detection of the printer again when the print data is detected, but a printer is not detected.

25. The data broadcast printing method of claim 23 wherein detection of the printer is performed again after a set amount of time has elapsed when the print data is detected, but a printer is not detected.

26. A data broadcast printing method comprising the steps of:
receiving data;
determining whether or not printing of the data is allowed; and
performing control to output a 'printing possible' display indicating that printing of the data on the display screen is allowed when the data is allowed to be printed, and display that printing of the data on the display screen is not possible when the data is not allowed to be printed.

27. The data broadcast printing method of claim 26 wherein the data is data in a data broadcast.

28. The data broadcast printing method of claim 26 wherein the data is data comprising files entered in a language for broadcasting, and that determines whether the data can be printed from the contents of the file entered in a language for broadcasting.

29. The data broadcast printing method of claim 28 wherein whether or not printing of the data is allowed is displayed by an object that is incorporated into the browser for displaying data on the display screen.

30. The data broadcast printing method of claim 26 wherein the display is performed using display data in the received data.

31. The data broadcast printing method of claim 26 wherein the display is performed using display data stored by the printer.

32. A printing apparatus comprising:
a data receiving unit;
a data memory unit that is operable to store printing-control data; and
a data transmission unit that is operable to send the printing control data after the data receiving unit receives a request.

33. A data broadcast printing method comprising the steps of:
interpreting received data;
determining whether or not it is allowed to print a hard copy when the display contents that are displayed according to the interpretation are hard copied; and
performing control such as to output a 'printing possible' display on the display screen to indicate that printing is allowed when printing of the hard copy is allowed, and display on the display screen that printing is not possible when printing of the hard copy is not allowed.

34. A data broadcast printing method comprising the steps of:
receiving data;
detecting print data that is multiplexed with the data; and
displaying that the print data is near the end of its valid period based on time-limit information that is contained in the print data when the print data is detected and when the time-limit information is contained in the print data.

35. A data broadcast printing method comprising the steps of:
receiving data;
detecting print data that is multiplexed with the data and detects a printer; and
displaying that the print data is near the end of its valid period based on time-limit information that is contained in the print data when the print data and the printer are detected and when the time-limit information is contained in the print data.

36. A data broadcast receiver that
receives a television-broadcast signal;
detects print data that is multiplexed with the television-broadcast signal, and detects a printer; and
performs control to detect the printer again when the print data is detected but a printer is not detected, and when a printer is detected, execute printing of the print data.

37. A data broadcast sending/receiving apparatus that
receives data,
determines whether or not printing of the data is allowed; and
performs control to output a 'printing possible' display indicating that printing of the data on the display screen is allowed when the data is data allowed to be printed, and display that printing of the data on the display screen is not possible when the data is not allowed to be printed.

38. The data broadcast sending/receiving apparatus of claim 37 wherein the data is data in a data broadcast.

39. The data broadcast ending/receiving apparatus of claim 37 wherein the data is data comprising files entered in a language for broadcasting, and that determines whether the data can be printed from the contents of the file entered in a language for broadcasting.

40. The data broadcast sending/receiving apparatus of claim 39 wherein whether or not printing of the data is allowed is displayed by an object that is incorporated into the browser for displaying data on the display screen.

41. The data broadcast sending/receiving apparatus of claim 37 wherein the display is performed using display data in the received data.

42. The data broadcast sending/receiving apparatus of claim 37 wherein the display is performed using display data stored by the printer.

43. A data broadcast sending/receiving apparatus comprising:
a receiving unit that is operable to receive data;
a browser unit that is operable to interpret received data; and
a control unit that is operable to perform control to determine whether or not it is allowed to print a hard copy when the display contents that are displayed according to the interpretation are hard copied, to output a 'printing possible' display on the display screen to indicate that printing is allowed when printing of the hard copy is allowed, and to display on the display screen that printing is not possible when printing of the hard copy is not allowed.

44. A data receiving apparatus that
receives data;
detects print data that is multiplexed with the data; and
displays that the print data is near the end of its valid period based on time-limit information that is contained in the print data when the print data is detected and when the time-limit information is contained in the print data.

45. A data receiving apparatus that
receives data;
detects print data that is multiplexed with the data and detects a printer; and
displays that the print data is near the end of its valid period based on time-limit information that is contained in the print data when the print data and the printer are detected and when the time-limit information is contained in the print data.

46. A data broadcast printing program that is executed by a computer to perform the steps of:
receiving a television-broadcast signal;
performing detection of print data that is multiplexed with the television-broadcast signal, and of a printer; and
detecting the printer again when the print data is detected but a printer is not detected, and when the printer is detected, executing printing of the print data.

47. A data broadcast printing program that is executed on a computer to perform the steps of:
receiving data;
determining whether or not printing of the data is allowed; and
outputting a 'printing possible' display indicating that printing of the data on the display screen is allowed when the data is data allowed to be printed, and displaying that printing of the data on the display screen is not possible when the data is not allowed to be printed.

48. A data broadcast printing program that is executed on a computer to perform the steps of:
interpreting received data;
determining whether or not it is allowed to print a hard copy of the display contents that are displayed according to the interpretation; and
performing control to output a 'printing possible' display on the display screen to indicate that a hard copy of the display contents is allowed, and display on the display screen that printing is not possible when a hard copy of the display contents is not allowed.

49. A data broadcast printing program that is executed on a computer to perform the steps of:
receiving data;
detecting print data that is multiplexed with the data; and
displaying that the print data is near the end of its valid period based on time-limit information that is contained in the print data when the print data is detected and when the time-limit information is contained in the print data.

50. A data broadcast printing program that is executed on a computer to perform the steps of:
receiving data;
performing detection of print data that is multiplexed with the data and of a printer; and
displaying that the print data is near the end of its valid period based on time-limit information that is contained in the print data when the print data and the printer are detected and when the time-limit information is contained in the print data.

51. A computer readable recording medium on which is recorded a data broadcast printing program that is executed by a computer to perform the steps of:
receiving a television-broadcast signal;
performing detection of print data that is multiplexed with the television-broadcast signal, and of a printer; and
detecting the printer again when the print data is detected but a printer is not detected, and when the printer is detected, executing printing of the print data.

52. A computer readable recording medium on which is recorded a data broadcast printing program that is executed by a computer to perform the steps of:
receiving data;
determining whether or not printing of the data is allowed; and
outputting a 'printing possible' display indicating that printing of the data on the display screen is allowed when the data is data allowed to be printed, and displaying that printing of the data on the display screen is not possible when the data is not allowed to be printed.

53. A computer readable recording medium on which is recorded a data broadcast printing program that is executed by a computer to perform the steps of:
interpreting received data;
determining whether or not it is allowed to print a hard copy of the display contents that are displayed according to the interpretation; and
performing control to output a 'printing possible' display on the display screen to indicate that a hard copy of the display contents is allowed, and display on the display screen that printing is not possible when a hard copy of the display contents is not allowed.

54. A computer readable recording medium on which is recorded a data broadcast printing program that is executed by a computer to perform the steps of:
receiving data;
detecting print data that is multiplexed with the data; and
displaying that the print data is near the end of its valid period based on time-limit information that is contained in the print data when the print data is detected and when the time-limit information is contained in the print data.

55. A computer readable recording medium on which is recorded a data broadcast printing program that is executed by a computer to perform the steps of:
receiving data;
performing detection of print data that is multiplexed with the data and of a printer; and
displaying that the print data is near the end of its valid period based on time-limit information that is contained in the print data when the print data and the printer are detected and when the time-limit information is contained in the print data.
